# EUROPEAN PATENT APPLICATION

(11) **EP 4 411 146 A1**
(43) Date of publication of application: **07.08.2024**
(21) Application number: 24151931.3
(22) Date of filing: 15.01.2024
(51) Int. Cl.: F15B 1/10, B60G 17/00, F15B 1/22, F16F 9/00

(54) **BELLOWS ACCUMULATOR**

(30) Priority: 01.02.2023 US 202318162937
(71) Applicant: DRiV Automotive Inc., Northville, MI 48168 (US)
(72) Inventor: HENDERICKX, Jonas, Northville, 48168 (US); BERWAERTS, Kenny, Northville, 48168 (US)
(74) Representative: AWA Sweden AB

(57) **Abstract**

A bellows accumulator for a vehicle suspension system and related methods of operating the accumulator include inserting a bellows assembly within an outer shell. The bellows assembly includes an annular bellows wall defining a gas chamber of variable volume. An accumulation chamber is provided between the outer shell and the bellows assembly. The method includes operating a valve in fluid communication with the accumulation chamber in an open condition and a closed condition, filling the accumulation chamber with fluid prior to filling the gas chamber with pressurized gas, providing a pressure differential between the pressurized gas chamber and the accumulation chamber to extend the annular bellows wall and operate the valve in the closed condition. The method includes protecting the bellows wall during pre-charging of the pressurized gas chamber as well as during vehicle suspension operation by maintaining fluid between the outer shell and the annular bellows wall.

## Description

### FIELD

The present disclosure relates generally to vehicle suspension systems. More particularly, the disclosure describes a bellows accumulator associated with a hydraulic damping system for a vehicle suspension.

### BACKGROUND

This section provided background information related to the present disclosure which is not necessarily prior art.

Vehicles are typically equipped with a suspension system operable to absorb loads input to the vehicle as it travels over less than a perfectly smooth surface, during cornering, braking and acceleration. In order to dissipate the energy associated with the vehicle traveling over bumps and recesses in the road surface, dampers are generally connected between a body and a suspension of the vehicle. Dampers are typically equipped with a piston connected to a vehicle body or suspension through a piston rod. The damper also includes a damper housing. The piston rod and an end of the damper housing opposite the piston rod typically include attachment interfaces that connect the damper to the vehicle body and the suspension system. As the damper is compressed or extended, the piston forces damping fluid to flow into and out of fluid chambers on either side of the piston in order to produce a damping force that counteracts the loads occurring during vehicle operation.

Dampers may also include or be fluidly connected to passive or active electromechanical valves that operate to restrict the flow of damping fluid between the chambers on either side of the piston. The valves may be internally or externally mounted to the damper.

Suspension systems including the aforementioned dampers not only attempt to control reactions to road loads at each wheel end but also attempt to improve the overall handling and safety of the vehicle. In particular, it may be desirable to decrease or otherwise control vehicle roll such as during corning operations and pitch that may occur under deceleration and acceleration of the vehicle. Roll and pitch moments may adversely affect tire adhesion, cornering performance, braking performance and may be uncomfortable to the driver and passengers. Many vehicles are equipped with devices such as stabilizer bars or mechanical linkages that extend laterally across the width of the vehicle to control roll. Several drawbacks exist with the mechanical anti-roll systems. Packaging concerns arise as the stabilizer bar typically requires an unobstructed path across the width of the vehicle. The mass of these devices may also be undesirably high. Furthermore, the mechanical systems may not be easily switched on or off or controlled to account for differing road load conditions and vehicle operating conditions.

More recently developed suspension systems replace traditional mechanical bars and linkages with fluid control systems hydraulically interconnecting two or more dampers located on the vehicle. A pressure change in one of the chambers of one damper will be transferred across the vehicle to another chamber in a different damper. While these systems may reduce roll, undesirable effects may arise such as the unwanted transmission of bump forces being transmitted from one damper to another damper across the hydraulic circuit resulting in undesirable suspension movement.

It should be appreciated that some suspension systems are equipped with one or more accumulators. The accumulator often includes a pressurized gas chamber and an accumulation chamber that supplies and receives damping fluid to a hydraulic system including the dampers. Several types of accumulators have been constructed including bladder accumulators, piston accumulators, and bellows accumulators.

In a bellows accumulator, a bellows defines an internal pressurized gas chamber. The bellows may extend and retract within a housing based on the pressure of the fluid in the system in which the pressurized gas chamber acts. The pressurized gas provides a positive pressure inside the bellows that will force dampening fluid out of the accumulator when fluid pressure in the accumulation chamber is less than the gas pressure inside the pressurized gas chamber. Typically, accumulators are preassembled and charged with pressurized gas before they are installed on or otherwise connected to a damper or suspension system. Unfortunately, damage to the bellows may occur prior to or during vehicle installation if an overpressure condition exists with the gas filled chamber. For instance, a bellows damage risk exists during initial pre-charging of the accumulator during accumulator manufacture. The bellows may be undesirably deformed during a procedure to fill the vehicle suspension system with fluid at a vehicle build site. Further opportunity for bellows damage exists when charging the hydraulic system on a vehicle or possibly during suspension servicing operations. In some instances during vehicle operation, conditions may exist that damage the bellows.

It is a particular concern to assure that the bellows maintains its proper shape and that the corrugations or pleats of the bellows are not undesirably deformed during a condition where the pressure within the bellows is significantly different than the pressure outside of the bellows. Bellows that have been improperly deformed may exhibit significantly lower fatigue life than desired. Accordingly, a need exists for an improved vehicle suspension system and bellows accumulator exhibiting robust structural integrity over the life of the suspension system.

### SUMMARY

A bellows accumulator for a vehicle suspension system and related methods of operating the accumulator include inserting a bellows assembly within an outer shell. The bellows assembly includes an annular bellows wall defining a gas chamber of variable volume. An accumulation chamber is provided between the outer shell and the bellows assembly. The method includes operating a valve in fluid communication with the accumulation chamber in an open condition and a closed condition, filling the accumulation chamber with fluid prior to filling the gas chamber with pressurized gas, providing a pressure differential between the pressurized gas chamber and the accumulation chamber to extend the annular bellows wall and operate the valve in the closed condition. The method includes protecting the bellows wall during pre-charging of the pressurized gas chamber as well as during vehicle suspension operation by maintaining fluid between the outer shell and the annular bellows wall.

In another arrangement, the present disclosure relates to a bellows accumulator for a vehicle suspension system including a damper. The bellows accumulator comprises an outer shell with an accumulator port and a gas charging port. A bellows assembly includes an annular bellows wall and a plate defining a gas chamber of variable volume. The plate is axially movable between a first position and a second position. The gas chamber is arranged in fluid communication with the gas charging port. An accumulation chamber is provided between the outer shell and the bellows assembly. The accumulation chamber is in fluid communication with the accumulator port. A valve is in fluid communication with the accumulation chamber. The valve is in an open condition when the plate is not at the second position and the valve in a closed condition when the plate is at the second position. The accumulation chamber is configured to be filled with fluid prior to filling the gas chamber with pressurized gas when the plate is not at the second position. The gas chamber contains pressurized gas and the fluid is entrapped between the annular bellows wall and the outer shell when the valve is in the closed condition

Further areas of applicability of the present disclosure will become apparent from the detailed description, the claims and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is a schematic diagram illustrating an exemplary suspension system of the present disclosure that includes comfort valves that open and close hydraulic lines connecting two front dampers and two rear dampers on the system;
FIG. 2 is a schematic diagram illustrating another exemplary suspension system of the present disclosure that includes four hydraulic circuits connecting the front and rear dampers and an exemplary comfort valve equipped manifold assembly;
FIG. 3 is a perspective view of an exemplary bellows accumulator constructed in accordance with the teachings of the present disclosure;
FIG. 4 is an exploded perspective view of the bellows accumulator depicted in FIG. 3;
FIG. 5 is a cross-sectional view taken along line 5-5 as shown in FIG. 3;
FIG.s 6a, 6b, 6c and 6d depict a method of charging the bellows accumulator in accordance with the teachings of the present disclosure;
FIG. 7 is a fragmentary cross-sectional view of an alternate embodiment bellows accumulator including an alternate valve or sealing configuration;
FIG. 8 is a fragmentary cross-sectional view of an alternate embodiment bellows accumulator including an alternate valve or sealing configuration;
FIG. 9 is a fragmentary cross-sectional view of an alternate embodiment bellows accumulator including an alternate valve or sealing configuration;
FIG. 10 is a fragmentary cross-sectional view of an alternate embodiment bellows accumulator including an alternate valve or sealing configuration;
FIG. 11 is a fragmentary cross-sectional view of an alternate embodiment bellows accumulator including an alternate valve or sealing configuration;
FIG. 12 is a fragmentary cross-sectional view of an alternate embodiment bellows accumulator including an alternate valve or sealing configuration;
FIG. 13 is a fragmentary cross-sectional view of an alternate embodiment bellows accumulator including an alternate valve or sealing configuration; and
FIG. 14 is a fragmentary cross-sectional view of an alternate embodiment bellows accumulator including an alternate valve or sealing configuration.

In the drawings, reference numbers may be reused to identify similar and/or identical elements.

### DETAILED DESCRIPTION

The present disclosure relates generally to suspension systems for motor vehicles equipped with an accumulator and, more particularly to suspension systems and accumulators including an expandable bellows surrounded by a liquid within a housing.

Example embodiments will now be described more fully with reference to the accompanying drawings. Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

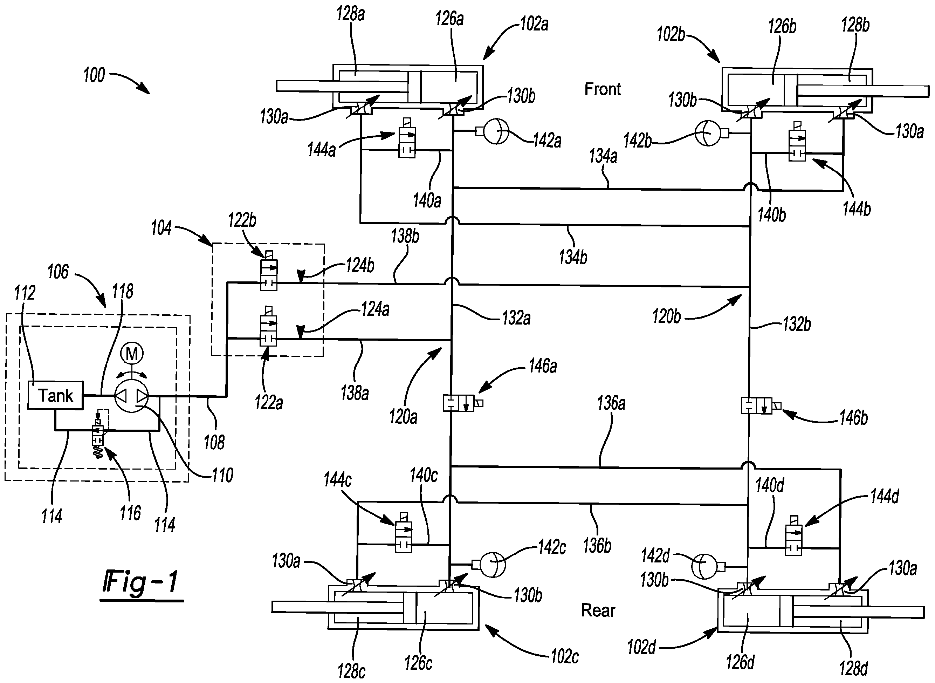

With reference to FIG. 1, a suspension system 100 including a front left damper 102a, a front right damper 102b, a back left damper 102c, and a back right damper 102d. While it should be appreciated that the suspension system 100 described herein may include a different number of dampers than those shown in the drawings, in most automotive applications, four dampers are used at each corner of a vehicle to control vertical movements of the front and rear wheels of the vehicle. Thus, the front left damper 102a controls (e.g., dampens) up and down (i.e., vertical) movements of the front left wheel of the vehicle, the front right damper 102b controls (e.g., dampens) up and down (i.e., vertical) movements of the front right wheel of the vehicle, the back left damper 102c controls (e.g., dampens) up and down (i.e., vertical) movements of the back left wheel of the vehicle, and the back right damper 102d controls (e.g., dampens) up and down (i.e., vertical) movements of the back right wheel of the vehicle.

The suspension system 100 also includes a manifold assembly 104 that is connected in fluid communication with a pump assembly 106 by a pump hydraulic line 108. Although other configurations are possible, in the illustrated example, the pump assembly 106 includes a bi-directional pump 110, a hydraulic reservoir 112 (e.g., a tank), and a bypass hydraulic line 114 that can be open and closed by a pressure relief valve 116. The bi-directional pump 110 includes a first inlet/outlet port that is connected to the pump hydraulic line 108 and a second inlet/outlet port that is connected in fluid communication with the hydraulic reservoir 112 by a reservoir hydraulic line 118. The bi-directional pump 110 may operate (i.e., pump fluid) in two opposite directions depending on the polarity of the electricity that is supplied to the pump 110, so the first inlet/outlet port may operate as either an inlet port or an outlet port depending on the direction the bi-directional pump 110 is operating in and the same is true for the second inlet/outlet port of the bi-directional pump 110. In the example where the first inlet/outlet port is operating as an inlet port for the bi-directional pump 110 and the second inlet/outlet port is operating as an outlet port for the bi-directional pump 110, the bi-directional pump 110 draws in hydraulic fluid from the pump hydraulic line 108 via the first inlet/outlet port and discharges hydraulic fluid into the reservoir hydraulic line 118 via the second inlet/outlet port. As such, the bi-directional pump 110 produces a negative pressure in the pump hydraulic line 108 that can be used by manifold assembly 104 to reduced fluid pressure in the suspension system 100. In the example where the second inlet/outlet port is operating as an inlet port for the bi-directional pump 110 and the first inlet/outlet port is operating as an outlet port for the bi-directional pump 110, the bi-directional pump 110 draws in hydraulic fluid from the reservoir hydraulic line 118 via the second inlet/outlet port and discharges hydraulic fluid into the pump hydraulic line 108 via the first inlet/outlet port. As such, the bi-directional pump 110 produces a positive pressure in the pump hydraulic line 108 that can be used by manifold assembly 104 to increase fluid pressure in the suspension system 100. The bypass hydraulic line 114 runs from the pump hydraulic line 108 to the hydraulic reservoir 112 and bleeds fluid back into the hydraulic reservoir 112 when the pressure in the pump hydraulic line 108 exceeds a threshold pressure that causes the pressure relief valve 116 to open.

The manifold assembly 104 is connected in fluid communication with the front and rear dampers 102a, 102b, 102c, 102d by first and second hydraulic circuits 120a, 120b. The manifold assembly 104 includes first and second manifold valves 122a, 122b that are connected in parallel with the pump hydraulic line 108. The first hydraulic circuit 120a is connected in fluid communication with the first manifold valve 122a and the second hydraulic circuit 120b is connected in fluid communication with the second manifold valve 122b. The manifold assembly 104 also includes a first pressure sensor 124a that is arranged to monitor the pressure in the first hydraulic circuit 120a and a second pressure sensor 124b that is arranged to monitor the pressure in the second hydraulic circuit 120b. The bi-directional pump 110 of the pump assembly 106 and first and second pressure sensors 124a, 124b and the first and second manifold valves 122a, 122b of the manifold assembly 104 are electrically connected to a controller (not shown), which is configured to activate (i.e., turn on in forward or reverse) the bi-directional pump 110 and electronically actuate (i.e., open and close) the first and second manifold valves 122a, 122b in response to various inputs, including signals from the first and second pressure sensors 124a, 124b. When the controller opens the first and second manifold valves 122a, 122b, the fluid pressure in the first and second hydraulic circuits 120a, 120b increases or decreases depending on which direction the bi-directional pump 110 is running in.

The anti-roll capabilities of the suspension system 100 will be explained in greater detail below; however, from FIG. 1 it should be appreciated that fluid pressure in the first and second hydraulic circuits 120a, 120b operate to dynamically adjust the roll stiffness of the vehicle and can be used to either augment or completely replace mechanical stabilizer bars / anti-roll bars. Such mechanical systems require relatively straight, unobstructed runs between each of the front dampers 102a, 102b and each of the back dampers 102c, 102d. Accordingly, the suspension system 100 disclosed herein offers packaging benefits because the dampers 102a, 102b, 102c, 102d only need to be hydraulically connected to the manifold assembly 104.

Each of the dampers 102a, 102b, 102c, 102d of the suspension system 100 includes a damper housing, a piston rod, and a piston that is mounted on the piston rod. The piston is arranged in sliding engagement with the inside of the damper housing such that the piston divides the damper housing into compression and rebound chambers. As such, the front left damper 102a includes a first compression chamber 126a and a first rebound chamber 128a, the front right damper 102b includes a second compression chamber 126b and a second rebound chamber 128b, the back left damper 102c includes a third compression chamber 126c and a third rebound chamber 128c, and the back right damper 102d includes a fourth compression chamber 126d and a fourth rebound chamber 128d.

In each damper 102a, 102b, 102c, 102d, the piston is a closed piston with no fluid flow paths defined within or by its structure. In addition, there are no other fluid flow paths in the damper housing such that no fluid is communicated between the compression and rebound chambers of the dampers 102a, 102b, 102c, 102d except through the first and second hydraulic circuits 120a, 120b. The rebound chambers 128a, 128b, 128c, 128d of the dampers 102a, 102b, 102c, 102d decrease in volume during rebound / extension strokes and increase in volume during compression strokes of the dampers 102a, 102b, 102c, 102d. The compression chambers 126a, 126b, 126c, 126d of the dampers 102a, 102b, 102c, 102d decrease in volume during compression strokes of the dampers 102a, 102b, 102c, 102d and increase in volume during rebound / extension strokes of the dampers 102a, 102b, 102c, 102d.

Each damper 102a, 102b, 102c, 102d also includes rebound and compression chamber ports 130a, 130b in the damper housing that are each provided with dampening valves. The rebound chamber port 130a is arranged in fluid communication with the rebound chamber 128a, 128b, 128c, 128d of the damper 102a, 102b, 102c, 102d and the second port 130b is arranged in fluid communication with the compression chamber 126a, 126b, 126c, 126d of the damper 102a, 102b, 102c, 102d. The dampening valves in the rebound and compression chamber ports 130a, 130b can be passive / spring-biased valves (e.g., spring-disc stacks) or active valves (e.g., electromechanical valves) and control fluid flow into and out of the compression and rebound chambers of the dampers 102a, 102b, 102c, 102d to provide one or more rebound dampening rates and compression dampening rates for each of the dampers 102a, 102b, 102c, 102d.

The first hydraulic circuit 120a includes a first longitudinal hydraulic line 132a that extends between and fluidly connects the second port 130b (to the first compression chamber 126a) of the front left damper 102a and the second port 130b (to the third compression chamber 126c) of the back left damper 102c. The first hydraulic circuit 120a includes a front hydraulic line 134a that extends between and fluidly connects the first longitudinal hydraulic line 132a and the rebound chamber port 130a (to the second rebound chamber 128b) of the front right damper 102b. The first hydraulic circuit 120a also includes a rear hydraulic line 136a that extends between and fluidly connects the first longitudinal hydraulic line 132a and the rebound chamber port 130a (to the fourth rebound chamber 128d) of the back right damper 102d. The first hydraulic circuit 120a further includes a first manifold hydraulic line 138a that extends between and fluidly connects the first longitudinal hydraulic line 132a and the first manifold valve 122a. The second hydraulic circuit 120b includes a second longitudinal hydraulic line 132b that extends between and fluidly connects the compression chamber port 130b (to the second compression chamber 126b) of the front right damper 102b and the compression chamber port 130b (to the fourth compression chamber 126d) of the back right damper 102d. The second hydraulic circuit 120b includes a front hydraulic line 134b that extends between and fluidly connects the second longitudinal hydraulic line 132b and the rebound chamber port 130a (to the first rebound chamber 128a) of the front left damper 102a. The second hydraulic circuit 120b also includes a rear hydraulic line 136b that extends between and fluidly connects the second longitudinal hydraulic line 132b and the rebound chamber port 130a (to the third rebound chamber 128c) of the back left damper 102c. The second hydraulic circuit 120b further includes a second manifold hydraulic line 138b that extends between and fluidly connects the second longitudinal hydraulic line 132b and the second manifold valve 122b. It should be appreciated that the word "longitudinal" as used in the first and second longitudinal hydraulic lines 132a, 132b simply means that the first and second longitudinal hydraulic lines 132a, 132b run between the front dampers 102a, 102b and the back dampers 102c, 102d generally. The first and second longitudinal hydraulic lines 132a, 132b need not be linear or arranged in any particular direction as long as they ultimately connect the front dampers 102a, 102b and the back dampers 102c, 102d.

The suspension system 100 also includes four bridge hydraulic lines 140a, 140b, 140c, 140d that fluidly couple the first and second hydraulic circuits 120a, 120b and each corner of the vehicle. The four bridge hydraulic lines 140a, 140b, 140c, 140d include a front left bridge hydraulic line 140a that extends between and fluidly connects the first longitudinal hydraulic line 132a of the first hydraulic circuit 120a and the front hydraulic line 134b of the second hydraulic circuit 120b, a front right bridge hydraulic line 140b that extends between and fluidly connects the front hydraulic line 134a of the first hydraulic circuit 120a and the second longitudinal hydraulic line 132b of the second hydraulic circuit 120b, a back left bridge hydraulic line 140c that extends between and fluidly connects the first longitudinal hydraulic line 132a of the first hydraulic circuit 120a and the rear hydraulic line 136b of the second hydraulic circuit 120b, and a back right bridge hydraulic line 140d that extends between and fluidly connects the rear hydraulic line 136a of the first hydraulic circuit 120a and the second longitudinal hydraulic line 132b of the second hydraulic circuit 120b.

The front left bridge hydraulic line 140a is connected to the first longitudinal hydraulic line 132a between the compression chamber port 130b of the front left damper 102a and the front hydraulic line 134a of the first hydraulic circuit 120a. The front right bridge hydraulic line 140b is connected to the second longitudinal hydraulic line 132b between the compression chamber port 130b of the front right damper 102b and the front hydraulic line 134b of the second hydraulic circuit 120b. The back left bridge hydraulic line 140c is connected to the first longitudinal hydraulic line 132a between the compression chamber port 130b of the back left damper 102c and the rear hydraulic line 136a of the first hydraulic circuit 120a. The back right bridge hydraulic line 140d is connected to the second longitudinal hydraulic line 132b between the compression chamber port 130b of the back right damper 102d and the rear hydraulic line 136b of the second hydraulic circuit 120b. In the illustrated example, the various hydraulic lines are made of flexible tubing (e.g., hydraulic hoses), but it should be appreciated that other conduit structures and/or fluid passageways can be used.

A front left accumulator 142a is arranged in fluid communication with the first longitudinal hydraulic line 132a at a location between the compression chamber port 130b of the front left damper 102a and the front left bridge hydraulic line 140a. A front right accumulator 142b is arranged in fluid communication with the second longitudinal hydraulic line 132b at a location between the compression chamber port 130b of the front right damper 102b and the front right bridge hydraulic line 140b. A back left accumulator 142c is arranged in fluid communication with the first longitudinal hydraulic line 132a at a location between the compression chamber port 130b of the back left damper 102c and the back left bridge hydraulic line 140c. A back right accumulator 142d is arranged in fluid communication with the second longitudinal hydraulic line 132b at a location between the compression chamber port 130b of the back right damper 102d and the back right bridge hydraulic line 140d. Each of the accumulators 142a, 142b, 142c, 142d have a variable fluid volume that increases and decreases depending on the fluid pressure in the first and second longitudinal hydraulic lines 132a, 132b. It should be appreciated that the accumulators 142a, 142b, 142c, 142d may be constructed in a number of different ways. For example and without limitation, the accumulators 142a, 142b, 142c, 142d may have accumulation chambers and pressurized gas chambers that are separated by floating pistons or flexible membranes, such as a bellows.

The suspension system 100 also includes six electro-mechanical comfort valves 144a, 144b, 144c, 144d, 146a, 146b that are connected in-line (i.e., in series) with each of the bridge hydraulic lines 140a, 140b, 140c, 140d and each of the longitudinal hydraulic lines 132a, 132b. A front left comfort valve 144a is positioned in the front left bridge hydraulic line 140a. A front right comfort valve 144b is positioned in the front right bridge hydraulic line 140b. A back left comfort valve 144c is positioned in the back left bridge hydraulic line 140c. A back right comfort valve 144d is positioned in the back right bridge hydraulic line 140d. A first longitudinal comfort valve 146a is positioned in the first longitudinal hydraulic line 132a between the front and rear hydraulic lines 134a, 136a of the first hydraulic circuit 120a. A second longitudinal comfort valve 146b is positioned in the second longitudinal hydraulic line 132b between the front and rear hydraulic lines 134b, 136b of the second hydraulic circuit 120b. In the illustrated example, the comfort valves 144a, 144b, 144c, 144d and the longitudinal comfort valves 146a, 146b are semi-active electro-mechanical valves with a combination of passive spring-disk elements and a solenoid. The comfort valves 144a, 144b, 144c, 144d and the longitudinal comfort valves 146a, 146b are electronically connected to the controller, which is configured to supply electrical current to the solenoids of the comfort valves 144a, 144b, 144c, 144d and the longitudinal comfort valves 146a, 146b to selectively and individually open and close the comfort valves 144a, 144b, 144c, 144d and the longitudinal comfort valves 146a, 146b.

The first pressure sensor 124a of the manifold assembly 104 is arranged to measure fluid pressure in the first manifold hydraulic line 138a and the second pressure sensor 124b of the manifold assembly 104 is arranged to measure fluid pressure in the second manifold hydraulic line 138b. When the vehicle is cornering, braking, or accelerating, the lateral and longitudinal acceleration is measured by one or more accelerometers (not shown) and the anti-roll torque to control the roll of the vehicle is calculated by the controller. Alternatively, the lateral and longitudinal acceleration of the vehicle can be computed by the controller based on a variety of different inputs, including without limitation, steering angle, vehicle speed, brake pedal position, and/or accelerator pedal position. The dampers 102a, 102b, 102c, 102d are used to provide forces that counteract the roll moment induced by the lateral acceleration, thus reducing the roll angle of the vehicle.

When the first and second manifold valves 122a, 122b are closed, the first and second hydraulic circuits 120a, 120b operate as a closed loop system, either together or separately depending on the open or closed status of the electro-mechanical comfort valves 144a, 144b, 144c, 144d and the longitudinal comfort valves 146a, 146b. When the first and/or second manifold valves 122a, 122b are open, the bi-directional pump 110 either adds or removes fluid from the first and/or second hydraulic circuits 120a, 120b. As will be explained in greater detail below, the suspension system 100 can control the roll stiffness of the vehicle, which changes the degree to which the vehicle will lean to one side or the other during corning (i.e., roll).

For example, when the vehicle is put into a right-hand turn, the momentum of the sprung weight of the vehicle tends to make the vehicle lean left towards the outside of the turn, compressing the front left damper 102a and the back left damper 102c. When this occurs, fluid flows out from the first compression chamber 126a of the front left damper 102a and the third compression chamber 126c of the back left damper 102c into the first longitudinal hydraulic line 132a of the first hydraulic circuit 120a. As a result of the weight transfer to the left side of the vehicle, the front right damper 102b and back right damper 102d begin to extend, causing fluid to flow out of the second rebound chamber 128b of the front right damper 102b and the fourth compression chamber 126d of the back right damper 102d into the front and rear hydraulic lines 134a, 136a of the first hydraulic circuit 120a. When the comfort valves 144a, 144b, 144c, 144d are closed, the fluid flow out of the first compression chamber 126a of the front left damper 102a, out of the third compression chamber 126c of the back left damper 102c, out of the second rebound chamber 128b of the front right damper 102b, and out of the fourth rebound chamber 128d of the back right damper 102d and into the front and rear hydraulic lines 134a, 136a of the first hydraulic circuit 120a increases the pressure in the front left and back left accumulators 142a, 142c, thus providing a passive roll resistance where it becomes increasingly more difficult to compress the front left damper 102a and the back left damper 102c since the first compression chamber 126a of the front left damper 102a and the third compression chamber 126c of the back left damper 102c are connected in fluid communication with the first hydraulic circuit 120a. At the same time, fluid flows out of front right and back right accumulators 142b, 142d and into the first rebound chamber 128a of the front left damper 102a, into the third rebound chamber 128c of the back left damper 102c, into the second compression chamber 126b of the front right damper 102b, and into the fourth compression chamber 126d of the back right damper 102d. The resulting pressure difference between the dampers 102a, 102b, 102c, 102d generates damper forces that counteract or resist the roll moment of the vehicle. Additional roll resistance can be added by opening the first manifold valve 122a as the bi-directional pump 110 is running in a first direction where the bi-directional pump 110 draws in hydraulic fluid from the reservoir hydraulic line 118 and discharges hydraulic fluid into the pump hydraulic line 108 to produce a positive pressure in the pump hydraulic line 108, which increases fluid pressure in the first hydraulic circuit 120a when the first manifold valve 122a is open.

The opposite is true when the vehicle is put into a left-hand turn, where the momentum of the sprung weight of the vehicle tends to make the vehicle lean right towards the outside of the turn, compressing the front right damper 102b and the back right damper 102d. When this occurs, fluid flows out from the second compression chamber 126b of the front right damper 102b and the fourth compression chamber 126d of the back right damper 102d into the second longitudinal hydraulic line 132b of the second hydraulic circuit 120b. As a result of the weight transfer to the right side of the vehicle, the front left damper 102a and back left damper 102c begin to extend, causing fluid to flow out of the first rebound chamber 128a of the front left damper 102a and the third rebound chamber 128c of the back left damper 102c into the front and rear hydraulic lines 134b, 136b of the second hydraulic circuit 120b. When the comfort valves 144a, 144b, 144c, 144d are closed, the fluid flow out of the second compression chamber 126b of the front right damper 102b, out of the fourth compression chamber 126d of the back right damper 102d, out of the first rebound chamber 128a of the front left damper 102a, and out of the third rebound chamber 128c of the back left damper 102c and into the front and rear hydraulic lines 134b, 136b of the second hydraulic circuit 120b increases the pressure in the front right and back right accumulators 142b, 142d, thus providing a passive roll resistance where it becomes increasingly more difficult to compress the front right damper 102b and the back right damper 102d since the second compression chamber 126b of the front right damper 102b and the fourth compression chamber 126d of the back right damper 102d are connected in fluid communication with the second hydraulic circuit 120b. At the same time, fluid flows out of front left and back left accumulators 142a, 142c and into the second rebound chamber 128b of the front right damper 102b, into the fourth rebound chamber 128d of the back right damper 102d, into the first compression chamber 126a of the front left damper 102a, and into the third compression chamber 126c of the back left damper 102c. The resulting pressure difference between the dampers 102a, 102b, 102c, 102d generates damper forces that counteract or resist the roll moment of the vehicle. Additional roll resistance can be added by opening the second manifold valve 122b as the bi-directional pump 110 is running in the first direction where the bi-directional pump 110 draws in hydraulic fluid from the reservoir hydraulic line 118 and discharges hydraulic fluid into the pump hydraulic line 108 to produce a positive pressure in the pump hydraulic line 108, which increases fluid pressure in the second hydraulic circuit 120b when the second manifold valve 122b is open.

It should also be appreciated that during cornering, the roll stiffness of the front dampers 102a, 102b can be coupled or de-coupled from the roll stiffness of the rear dampers 102c, 102d by opening and closing the first and/or second longitudinal comfort valves 146a, 146b. For example, the roll stiffness of the front left damper 102a and the back left damper 102c will be coupled when the first longitudinal comfort valve 146a is open and decoupled when the first longitudinal comfort valve 146a is closed. Similarly, the roll stiffness of the front right damper 102b and the back right damper 102d will be coupled when the second longitudinal comfort valve 146b is open and decoupled when the second longitudinal comfort valve 146b is closed.

When roll stiffness is not required, the comfort valves 144a, 144b, 144c, 144d and the longitudinal comfort valves 146a, 146b can be opened to enhance the ride comfort of the suspension system 100 and reduce or eliminate unwanted suspension movements resulting from the hydraulic coupling of one damper of the system to another damper of the system (e.g., where the compression of one damper causes movement and/or a dampening change in another damper). For example, when the front left comfort valve 144a is open and the front left damper 102a undergoes a compression stroke as the front left wheel hits a bump, fluid may flow from the first compression chamber 126a of the front left damper 102a, into the first longitudinal hydraulic line 132a, from the first longitudinal hydraulic line 132a to the front hydraulic line 134b of the second hydraulic circuit 120b by passing through the front left bridge hydraulic line 140a and the front left comfort valve 144a, and into the first rebound chamber 128a of the front left damper 102a. Thus, fluid can travel from the first compression chamber 126a to the first rebound chamber 128a of the front left damper 102a with the only restriction coming from the dampening valves in the rebound and compression chamber ports 130a, 130b of the front left damper 102a. As such, when all of the comfort valves 144a, 144b, 144c, 144d and the longitudinal comfort valves 146a, 146b are open, the dampers 102a, 102b, 102c, 102d are effectively decoupled from one another for improved ride comfort. It should also be appreciated that to return the suspension system 100 to this "comfort mode" of operation, the first and/or second manifold valves 122a, 122b may be opened while the bi-directional pump 110 is running in a second direction where the bi-directional pump 110 draws in hydraulic fluid from the pump hydraulic line 108 and discharges hydraulic fluid into the reservoir hydraulic line 118 to produce a negative pressure in the pump hydraulic line 108 that reduces fluid pressure in the first and/or second hydraulic circuits 120a, 120b.

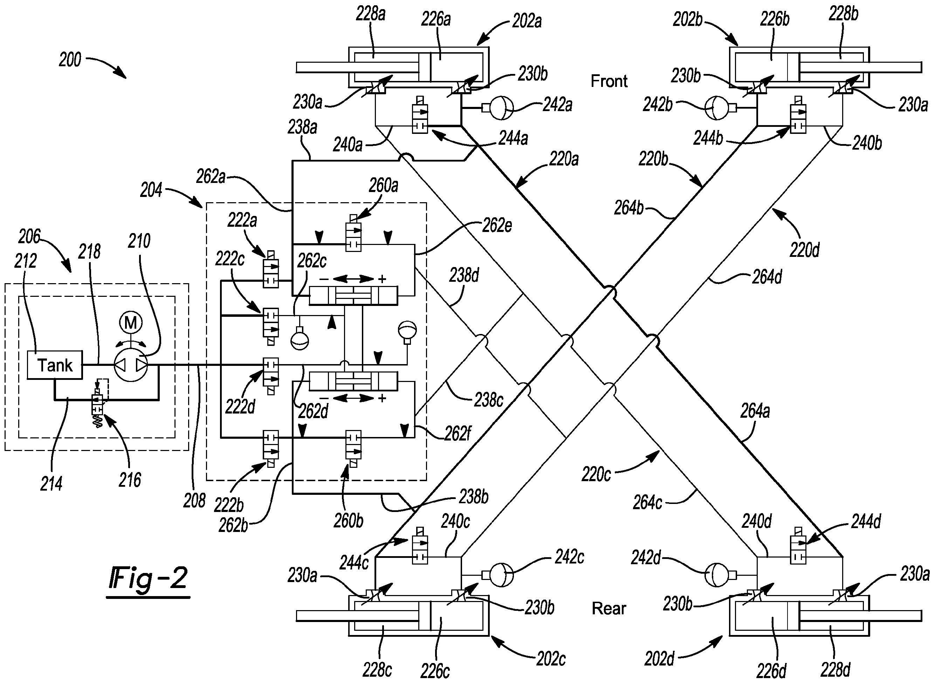

With reference to FIG. 2, another suspension system 200 is illustrated that shares many of the same components as the suspension system 100 illustrated in FIG. 1. Rather than repeat the description set forth above, the following paragraphs describe the structure and function of the components in FIG. 2 that are new and/or different from those shown and described in connection with FIG. 1. It should be appreciated that the reference numbers in FIG. 1 are "100" series numbers (e.g., 100, 102, 104, etc.) whereas the components in FIG. 2 that are the same or similar to the components of the suspension system 100 shown in FIG. 1 share the same base reference numbers but are listed as "200" series numbers (e.g., 200, 202, 204, etc.). Thus, the same description for element 100 above applies to element 200 in FIG. 2 and so on and so forth.

The suspension system 200 in FIG. 2 also includes a front left damper 202a, a front right damper 202b, a back left damper 202c, and a back right damper 202d. The suspension system 200 also includes a manifold assembly 204 that is connected in fluid communication with a pump assembly 206 by a pump hydraulic line 208. Like in FIG. 1, the pump assembly 206 includes a bi-directional pump 210, a hydraulic reservoir 212 (e.g., a tank), and a bypass hydraulic line 214 that can be open and closed by a pressure relief valve 216.

The manifold assembly 204 is connected in fluid communication with the front and rear dampers 202a, 202b, 202c, 202d by four hydraulic circuits 220a, 220b, 220c, 220d: a first hydraulic circuit 220a, a second hydraulic circuit 220b, a third hydraulic circuit 220c, and a fourth hydraulic circuit 220d. The manifold assembly 204 includes four manifold valves 222a, 222b, 222c, 222d (a first manifold valve 222a, a second manifold valve 222b, a third manifold valve 222c, and a fourth manifold valve 222d) that are connected in parallel with the pump hydraulic line 208. Manifold assembly 204 further includes a first manifold comfort valve 260a, a second manifold comfort valve 260b, and six manifold conduits 262a, 262b, 262c, 262d, 262e, 262f: a first manifold conduit 262a, a second manifold conduit 262b, a third manifold conduit 262c, a fourth manifold conduit 262d, a fifth manifold conduit 262e, and a sixth manifold conduit 262f. The first manifold conduit 262a is connected in fluid communication with the first manifold valve 222a and the first manifold comfort valve 260a while the second manifold conduit 262b is connected in fluid communication with the second manifold valve 222b and the second manifold comfort valve 260b. The third manifold conduit 262c is connected in fluid communication with the third manifold valve 222c and the fourth manifold conduit 262d is connected in fluid communication with the fourth manifold valve 222d. The fifth manifold conduit 262e is connected in fluid communication with the first manifold comfort valve 260a and the sixth manifold conduit 262f is connected in fluid communication with the second manifold comfort valve 260b. It should be appreciated from FIG. 2 that fluid pressure in the four hydraulic circuits 220a, 220b, 220c, 220d operates to dynamically adjust the roll and pitch stiffness of the vehicle and can be used to either augment or completely replace mechanical stabilizer bars / anti-roll bars. Such mechanical systems require relatively straight, unobstructed runs between each of the front dampers 202a, 202b and each of the back dampers 202c, 202d. Accordingly, the suspension system 200 disclosed herein offers packaging benefits because the dampers 202a, 202b, 202c, 202d only need to be hydraulically connected to the manifold assembly 204.

The first hydraulic circuit 220a includes a first cross-over hydraulic line 264a that extends between and fluidly connects the compression chamber port 230b (to the first compression chamber 226a) of the front left damper 202a and the rebound chamber port 230a (to the fourth rebound chamber 228d) of the back right damper 202d. The first hydraulic circuit 220a also includes a first manifold hydraulic line 238a that extends between and fluidly connects the first cross-over hydraulic line 264a and the first manifold conduit 262a. The second hydraulic circuit 220b includes a second cross-over hydraulic line 264b that extends between and fluidly connects the compression chamber port 230b (to the second compression chamber 226b) of the front right damper 202b and the rebound chamber port 230a (to the third rebound chamber 228c) of the back left damper 202c. The second hydraulic circuit 220b also includes a second manifold hydraulic line 238b that extends between and fluidly connects the second cross-over hydraulic line 264b and the second manifold conduit 262b. The third hydraulic circuit 220c includes a third cross-over hydraulic line 264c that extends between and fluidly connects the rebound chamber port 230a (to the first rebound chamber 228a) of the front left damper 202a and the compression chamber port 230b (to the fourth compression chamber 226d) of the back right damper 202d. The third hydraulic circuit 220c also includes a third manifold hydraulic line 238c that extends between and fluidly connects the third cross-over hydraulic line 264c and the sixth manifold conduit 262f. The fourth hydraulic circuit 220d includes a fourth cross-over hydraulic line 262d that extends between and fluidly connects the rebound chamber port 230a (to the second rebound chamber 228b) of the front right damper 202b and the compression chamber port 230b (to the third compression chamber 226c) of the back left damper 202c. The fourth hydraulic circuit 220d also includes a fourth manifold hydraulic line 238d that extends between and fluidly connects the fourth cross-over hydraulic line 264d and the fifth manifold conduit 262e. It should be appreciated that the word "cross-over" as used in the first, second, third, and fourth cross-over hydraulic lines 264a, 264b, 264c, 264d simply means that the first, second, third, and fourth cross-over hydraulic lines 264a, 264b, 264c, 264d run between dampers 202a, 202b, 202c, 202d at opposite corners of the vehicle (e.g., front left to back right and front right to back left). The first, second, third, and fourth cross-over hydraulic lines 264a, 264b, 264c, 264d need not be linear or arranged in any particular direction as long as they ultimately connect dampers 202a, 202b, 202c, 202d positioned at opposite corners of the vehicle.

The suspension system 200 also includes four bridge hydraulic lines 240a, 240b, 240c, 240d that fluidly couple the first and third hydraulic circuits 220a, 220c and the second and fourth hydraulic circuits 220b, 220d to one another. The four bridge hydraulic lines 240a, 240b, 240c, 240d include a front left bridge hydraulic line 240a that extends between and fluidly connects the first cross-over hydraulic line 264a and the third cross-over hydraulic line 264c, a front right bridge hydraulic line 240b that extends between and fluidly connects the second cross-over hydraulic line 264b and the fourth cross-over hydraulic line 264d, a back left bridge hydraulic line 240c that extends between and fluidly connects the second cross-over hydraulic line 264b and the fourth cross-over hydraulic line 264d, and a back right bridge hydraulic line 240d that extends between and fluidly connects the first cross-over hydraulic line 264a and the third cross-over hydraulic line 264c.

The front left bridge hydraulic line 240a is connected to the first cross-over hydraulic line 264a between the compression chamber port 230b of the front left damper 202a and the first manifold hydraulic line 238a and is connected to the third cross-over hydraulic line 264c between the rebound chamber port 230a of the front left damper 202a and the third manifold hydraulic line 238c. The front right bridge hydraulic line 240b is connected to the second cross-over hydraulic line 264b between the compression chamber port 230b of the front right damper 202b and the second manifold hydraulic line 238b and is connected to the fourth cross-over hydraulic line 264d between the rebound chamber port 230a of the front right damper 202b and the fourth manifold hydraulic line 238d. The back left bridge hydraulic line 240c is connected to the second cross-over hydraulic line 264b between the rebound chamber port 230a of the back left damper 202c and the second manifold hydraulic line 238b and is connected to the fourth cross-over hydraulic line 264d between the compression chamber port 230b of the back left damper 202c and the fourth manifold hydraulic line 238d. The back right bridge hydraulic line 240d is connected to the first cross-over hydraulic line 264a between the rebound chamber port 230a of the back right damper 202d and the first manifold hydraulic line 238a and is connected to the third cross-over hydraulic line 264c between the compression chamber port 230b of the back right damper 202d and the third manifold hydraulic line 238c. In the illustrated example, the various hydraulic lines are made of flexible tubing (e.g., hydraulic hoses), but it should be appreciated that other conduit structures and/or fluid passageways can be used.

A front left accumulator 242a is arranged in fluid communication with the first cross-over hydraulic line 264a at a location between the compression chamber port 230b of the front left damper 202a and the front left bridge hydraulic line 240a. A front right accumulator 242b is arranged in fluid communication with the second cross-over hydraulic line 264b at a location between the compression chamber port 230b of the front right damper 202b and the front right bridge hydraulic line 240b. A back left accumulator 242c is arranged in fluid communication with the fourth cross-over hydraulic line 264d at a location between the compression chamber port 230b of the back left damper 202c and the back left bridge hydraulic circuit 220c. A back right accumulator 242d is arranged in fluid communication with the third cross-over hydraulic line 264c at a location between the compression chamber port 230b of the back right damper 202d and the back right bridge hydraulic line 240d. Each of the accumulators 242a, 242b, 242c, 242d have a variable fluid volume that increases and decreases depending on the fluid pressure in the first, second, third, and fourth cross-over hydraulic lines 264a, 264b, 264c, 264d. It should be appreciated that the accumulators 242a, 242b, 242c, 242d may be constructed in a number of different ways. For example and without limitation, the accumulators 242a, 242b, 242c, 242d may have accumulation chambers and pressurized gas chambers that are separated by floating pistons or flexible membranes, such as a bellows.

The suspension system 200 also includes four electro-mechanical comfort valves 244a, 244b, 244c, 244d that are connected in-line (i.e., in series) with each of the bridge hydraulic lines 240a, 240b, 240c, 240d. A front left comfort valve 244a is positioned in the front left bridge hydraulic line 240a. A front right comfort valve 244b is positioned in the front right bridge hydraulic line 240b. A back left comfort valve 244c is positioned in the back left bridge hydraulic line 240c. A back right comfort valve 244d is positioned in the back right bridge hydraulic line 240d. In the illustrated example, the four comfort valves 242a, 244b, 244c, 244d and the two manifold comfort valves 260a, 260b are semi-active electro-mechanical valves with a combination of passive spring-disk elements and a solenoid. The comfort valves 244a, 244b, 244c, 244d and the two manifold comfort valves 260a, 260b are electronically connected to the controller, which is configured to supply electrical current to the solenoids of the comfort valves 244a, 244b, 244c, 244d and the two manifold comfort valves 260a, 260b to selectively and individually open and close the comfort valves 244a, 244b, 244c, 244d and the two manifold comfort valves 260a, 260b.

When the manifold valves 222a, 222b, 222c, 222d are closed, the hydraulic circuits 220a, 220b, 220c, 220d operate as a closed loop system, either together or separately depending on the open or closed status of the comfort valves 244a, 244b, 244c, 244d and manifold comfort valves 260a, 260b. When the manifold valves 222a, 222b, 222c, 222d are open, the bi-directional pump 110 either adds or removes fluid from one or more of the hydraulic circuits 220a, 220b, 220c, 220d. There are three primary types of suspension movements that the illustrated suspension system 200 can control either passively (i.e., as a closed loop system) or actively (i.e., as an open loop system) by changing or adapting the roll and/or pitch stiffness of the vehicle: leaning to one side or the other during cornering (i.e., roll) pitching forward during braking (i.e., brake dive), and pitching aft during acceleration (i.e., rear end squat). Descriptions of how the suspension system 200 reacts to each of these conditions are provided below.

When the vehicle is put into a right-hand turn, the momentum of the sprung weight of the vehicle tends to make the vehicle lean left towards the outside of the turn, compressing the front left damper 202a and the back left damper 202c. When this occurs, fluid flows out from the first compression chamber 226a of the front left damper 202a and the third compression chamber 226c of the back left damper 202c into the first and fourth cross-over hydraulic lines 264a, 264d. As a result of the weight transfer to the left side of the vehicle, the front right damper 202b and back right damper 202d begin to extend, causing fluid to flow out of the second rebound chamber 228b of the front right damper 202b and the fourth rebound chamber 228d of the back right damper 202d into the first and fourth cross-over hydraulic lines 264a, 264d. When the comfort valves 244a, 244b, 244c, 244d are closed, the fluid flow out of the first compression chamber 226a of the front left damper 202a, out of the third compression chamber 226c of the back left damper 202c, out of the second rebound chamber 228b of the front right damper 202b, and out of the fourth rebound chamber 228d of the back right damper 202d and into the first and fourth cross-over hydraulic lines 264a, 264d increases the pressure in the front left and back left accumulators 242a, 242c, thus providing a passive roll resistance where it becomes increasingly more difficult to compress the front left damper 202a and the back left damper 202c since the first compression chamber 226a of the front left damper 202a and the third compression chamber 226c of the back left damper 202c are connected in fluid communication with the first and fourth hydraulic circuits 220a, 220d. At the same time, fluid flows out of front right and back right accumulators 242b, 242d and into the first rebound chamber 228a of the front left damper 202a, into the third rebound chamber 228c of the back left damper 202c, into the second compression chamber 226b of the front right damper 202b, and into the fourth compression chamber 226d of the back right damper 202d. The resulting pressure difference between the dampers 202a, 202b, 202c, 202d generates damper forces that counteract or resist the roll moment of the vehicle. Additional roll resistance can be added by opening the first manifold valve 222a and the first manifold comfort valve 260a as the bi-directional pump 210 is running in a first direction where the bi-directional pump 210 draws in hydraulic fluid from the reservoir hydraulic line 218 and discharges hydraulic fluid into the pump hydraulic line 208 to produce a positive pressure in the pump hydraulic line 208, which increases fluid pressure in the first and fourth hydraulic circuits 220a, 220d.

The opposite is true when the vehicle is put into a left-hand turn, where the momentum of the sprung weight of the vehicle tends to make the vehicle lean right towards the outside of the turn, compressing the front right damper 202b and the back right damper 202d. When this occurs, fluid flows out from the second compression chamber 226b of the front right damper 202b and the fourth compression chamber 226d of the back right damper 202d into the second and third cross-over hydraulic lines 264b, 264c. As a result of the weight transfer to the right side of the vehicle, the front left damper 202a and back left damper 202c begin to extend, causing fluid to flow out of the first rebound chamber 228a of the front left damper 202a and the third rebound chamber 228c of the back left damper 202c into the second and third cross-over hydraulic lines 264b, 264c. When the comfort valves 244a, 244b, 244c, 244d are closed, the fluid flow out of the second compression chamber 226b of the front right damper 202b, out of the fourth compression chamber 226d of the back right damper 202d, out of the first rebound chamber 228a of the front left damper 202a, and out of the third rebound chamber 228c of the back left damper 202c and into the second and third cross-over hydraulic lines 264b, 264c increases the pressure in the front right and back right accumulators 142b, 142d, thus providing a passive roll resistance where it becomes increasingly more difficult to compress the front right damper 202b and the back right damper 202d since the second compression chamber 226b of the front right damper 202b and the fourth compression chamber 226d of the back right damper 202d are connected in fluid communication with the second and third hydraulic circuits 220b, 220c. At the same time, fluid flows out of front left and back left accumulators 242a, 242c and into the second rebound chamber 228b of the front right damper 202b, into the fourth rebound chamber 228d of the back right damper 202d, into the first compression chamber 226a of the front left damper 202a, and into the third compression chamber 226c of the back left damper 202c. The resulting pressure difference between the dampers 202a, 202b, 202c, 202d generates damper forces that counteract or resist the roll moment of the vehicle. Additional roll resistance can be added by opening the second manifold valve 222b and the second manifold comfort valve 260b as the bi-directional pump 210 is running in the first direction where the bi-directional pump 210 draws in hydraulic fluid from the reservoir hydraulic line 218 and discharges hydraulic fluid into the pump hydraulic line 208 to produce a positive pressure in the pump hydraulic line 208, which increases fluid pressure in the second and third hydraulic circuits 220b, 220c.

During braking, the momentum of the sprung weight of the vehicle tends to make the vehicle pitch or dive forward, compressing the front left damper 202a and the front right damper 202b. When this occurs, fluid flows out from the first compression chamber 226a of the front left damper 202a into the first cross-over hydraulic line 264a and out from the second compression chamber 226b of the front right damper 202b into the second cross-over hydraulic line 264b. As a result of the weight transfer to the front of the vehicle, the back left damper 202c and back right damper 202d begin to extend, causing fluid to flow out of the third rebound chamber 228c of the back left damper 202c into the second cross-over hydraulic line 264b and out of the fourth rebound chamber 228d of the back right damper 202d into the first cross-over hydraulic line 264a. With the front left, front right, back left, and back right comfort valves 244a, 244b, 244c, 244d and the first and second manifold comfort valves 260a, 260b all closed, the fluid flow out of the third rebound chamber 228c of the back left damper 202c and the fourth rebound chamber 228d of the back right damper 202d into the first and second cross-over hydraulic lines 264a, 264b increases the pressure in the front left and front right accumulators 242a, 242b, thus providing a passive pitch resistance where it becomes increasingly more difficult to compress the front left damper 202a and the front right damper 202b since the first compression chamber 226a of the front left damper 202a and the second compression chamber 226b of the front right damper 202b are connected in fluid communication with the first and second hydraulic circuits 220a, 220b.

During acceleration, the momentum of the sprung weight of the vehicle tends to make the vehicle pitch or squat rearward (i.e., aft), compressing the back left damper 202c and the back right damper 202d. When this occurs, fluid flows out from the third compression chamber 226c of the back left damper 202c into the fourth cross-over hydraulic line 264d and out of the fourth compression chamber 226d of the back right damper 202d into the third cross-over hydraulic line 264c. As a result of the weight transfer to the back / rear of the vehicle, the front left damper 202a and front right damper 202b begin to extend, causing fluid to flow out of the first rebound chamber 228a of the front left damper 202a into the third cross-over hydraulic line 264c and out of the second rebound chamber 228b of the front right damper 202b into the fourth cross-over hydraulic line 264d. With the front left, front right, back left, and back right comfort valves 242a, 244b, 244c, 244d and the first and second manifold comfort valves 260a, 260b all closed, the fluid flow out of the first rebound chamber 228a of the front left damper 202a and the second rebound chamber 228b of the front right damper 202b into the third and fourth cross-over hydraulic lines 264c, 264d increases the pressure in the back left and back right accumulators 242c, 242d, thus providing a passive pitch resistance where it becomes increasingly more difficult to compress the back left damper 202c and the back right damper 202d since the third compression chamber 226c of the back left damper 202c and the fourth compression chamber 226d of the back right damper 202d are connected in fluid communication with the third and fourth hydraulic circuits 220c, 220d.

When active or passive roll and/or pitch stiffness is not required, the four comfort valves 244a, 244b, 244c, 244d and the two manifold comfort valves 260a, 260b can be opened to enhance the ride comfort of the suspension system 200 and reduce or eliminate unwanted suspension movements resulting from the hydraulic coupling of one damper of the system to another damper of the system (e.g., where the compression of one damper causes movement and/or a dampening change in another damper). For example, when the front left comfort valve 244a is open and the front left damper 202a undergoes a compression stroke as the front wheel hits a bump, fluid may flow from the first compression chamber 226a of the front left damper 202a, into the first cross-over hydraulic line 264a, from the first cross-over hydraulic line 264a to the third cross-over hydraulic line 264c by passing through the front left bridge hydraulic line 240a and the front left comfort valve 244a, and into the first rebound chamber 228a of the front left damper 202a. Thus, fluid can travel from the first compression chamber 226a to the first rebound chamber 228a of the front left damper 202a with the only restriction coming from the dampening valves in the rebound and compression chamber ports 230a, 230b of the front left damper 202a. As such, when all of the comfort valves 244a, 244b, 244c, 244d and the manifold comfort valves 260a, 260b are open, the dampers 202a, 202b, 202c, 202d are effectively decoupled from one another for improved ride comfort. It should also be appreciated that to return the suspension system 200 to this "comfort mode" of operation, the manifold valves 222a, 222b, 222c, 222d and/or the manifold comfort valves 260a, 260b may be opened while the bi-directional pump 210 is running in a second direction where the bi-directional pump 210 draws in hydraulic fluid from the pump hydraulic line 208 and discharges hydraulic fluid into the reservoir hydraulic line 218 to produce a negative pressure in the pump hydraulic line 208 that reduces fluid pressure in the hydraulic circuits 220a, 220b, 220c, 220d of the suspension system 200.

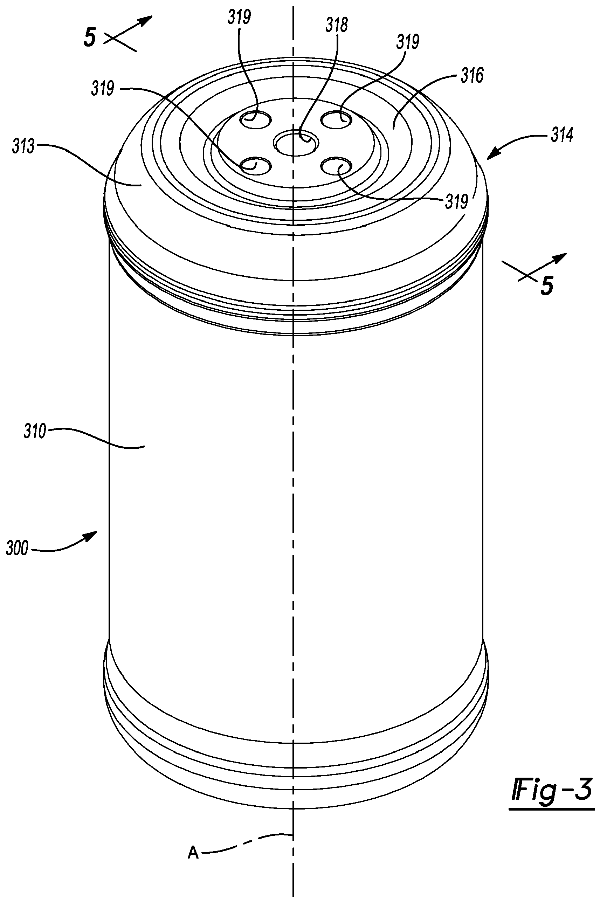

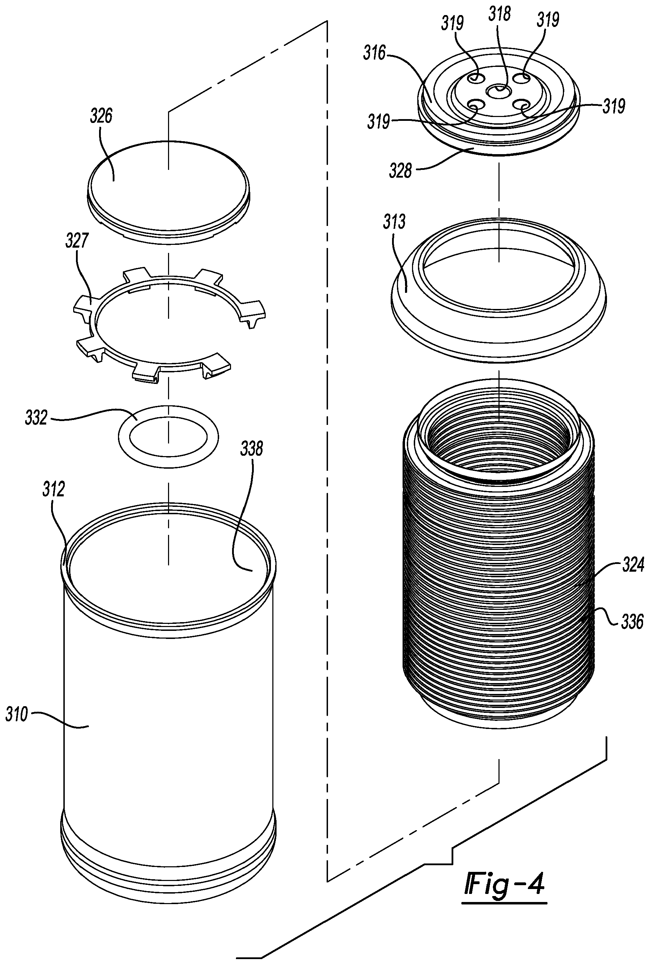

With reference to Figs. 3-5, at least one of accumulators 142a, 142b, 142c, 142d, 242a, 242b, 242c and 242d may be configured as a bellows accumulator. An exemplary bellows accumulator is identified by reference numeral 300 in the Figures. It should be appreciated that accumulator 300 may be positioned at any number of physical locations on the vehicle as long as fluid communication occurs between an accumulation chamber 304 of accumulator 300 and a desired hydraulic line, damper or valve of the suspension system. In one example, accumulator 300 is directly fixed to a base of a damper housing (not shown).

Accumulator 300 includes an accumulator port 302 and an accumulation chamber 304 that are arranged in fluid communication with at least one of the fluid lines, dampers, or valves previously described. Accumulation chamber 304 contains the same fluid that passes through the hydraulic lines of the suspension system. Further, accumulator 300 also includes a pressurized gas chamber 306 that is defined by and contained within a bellows assembly 308 that is positioned inside an outer shell 310 of accumulator 300. After completion of a pre-charging procedure described in greater detail below, pressurized gas chamber 306 is filled with a pressurized gas and is sealed and fluidly isolated (i.e., separated) from the accumulation chamber 304. In the illustrated example, accumulation chamber 304 is positioned longitudinally between the pressurized gas chamber 306 and accumulator port 302. However, it should be appreciated that accumulator 300 could be designed with accumulation chamber 304 in an alternative location, such as between pressurized gas chamber 306 and a structural component, a damper, or another portion of outer shell 310.

Bellows assembly 308 is expandable and compressible in an axial direction inside outer shell 310 of accumulator 300 such that the volume of both the accumulation chamber 304 and pressurized gas chamber 306 can increase and decrease with changes to the fluid pressure within accumulation chamber 304.

The pressurized gas inside pressurized gas chamber 306 of accumulator 300 operates to apply a positive pressure inside accumulator 300, which forces fluid out of accumulation chamber 304 when fluid pressure at accumulator port 302 is less than the gas pressure inside pressurized gas chamber 306. In other words, pressurized gas chamber 306 will increase in volume and accumulation chamber 304 will decrease in volume until the pressure equalizes between accumulation chamber 304 and pressurized gas chamber 306. Conversely, when fluid pressure at accumulator port 302 increases, fluid flows into accumulation chamber 304, causing accumulation chamber 304 to increase in volume and pressurized gas chamber 306 to decrease in volume until pressure equalizes.

Outer shell 310 of accumulator 300 is generally cylindrical in shape and extends annularly about an accumulator axis A. Outer shell 310 of accumulator 300 includes an open end 312 that abuts a crown 313 at a distal end 314 of accumulator 300. Crown 313 is sealed and fixed to outer shell 310. A cap 316 is sealed and fixed to crown 313. Cap 316 includes a gas charging port 318 and a plurality of mounting apertures 319. Cap 316 is generally arranged along a transverse plane that is substantially perpendicular to the accumulator axis A. As such, cap 316 of accumulator 300 generally closes off distal end 314 of outer shell 310 apart from an opening provided by gas charging port 318 on distal end 314.

Although other configurations are possible, outer shell 310 of accumulator 300 may be made of metal and includes an integral end wall 320 formed as one-piece with outer shell 310. End wall 320 generally transversely extends relative to accumulator axis A. A nipple 322 axially extends from end wall 320 and includes accumulator port 302. Nipple 322 may be externally threaded to provide a mounting provision for accumulator 300. Apertures 319 may be used as drive sockets for a tool (not shown) to fix nipple 322 to any suitable structure. Other geometrical features may be provided in lieu of or in addition to apertures 319 to apply a torque to outer shell 310 and nipple 322 such as a hexagon shape on cap 316 and milled slots or flats on outer shell 310. It is also contemplated that alternate mounting arrangements such as threaded apertures or axially extending studs may be provided on outer shell 310 such as at end wall 320.

Bellows assembly 308 of accumulator 300 is arranged in a sliding / slip fit inside outer shell 310 and has an annular bellows wall 324, which extends coaxially about the accumulator axis A and axially between cap 316 and a plate 326 of the bellows assembly 308. Plate 326 of bellows assembly 308 has a disc shape and an outer diameter that is fixed to annular bellows wall 324. A centering ring 327 may be used to align annular bellows wall 324 within outer shell 310 along accumulator axis A. Centering ring 327 minimizes the likelihood that bellows assembly 308 will contact inside surface 338 of outer shell 310. Cap 316 includes an annular flange 328 that is fixed to annular bellows wall 324 at distal end 314. Together, annular bellows wall 324, cap 316 and plate 326 of bellows assembly 308 cooperate to define pressurized gas chamber 306 within accumulator 300. Annular bellows wall 324 has a corrugated shape, which allows bellows assembly 308 to expand and contract in length (i.e., the distance between cap 316 and plate 326 of bellows assembly 308 can increase or decrease) depending on the pressure differential between the accumulation chamber 304 and the pressurized gas chamber 306.

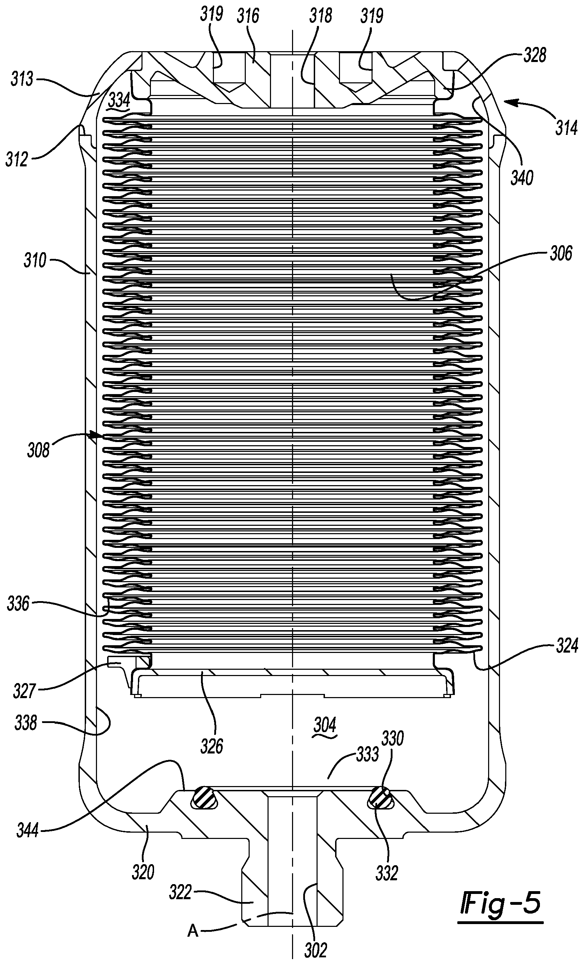

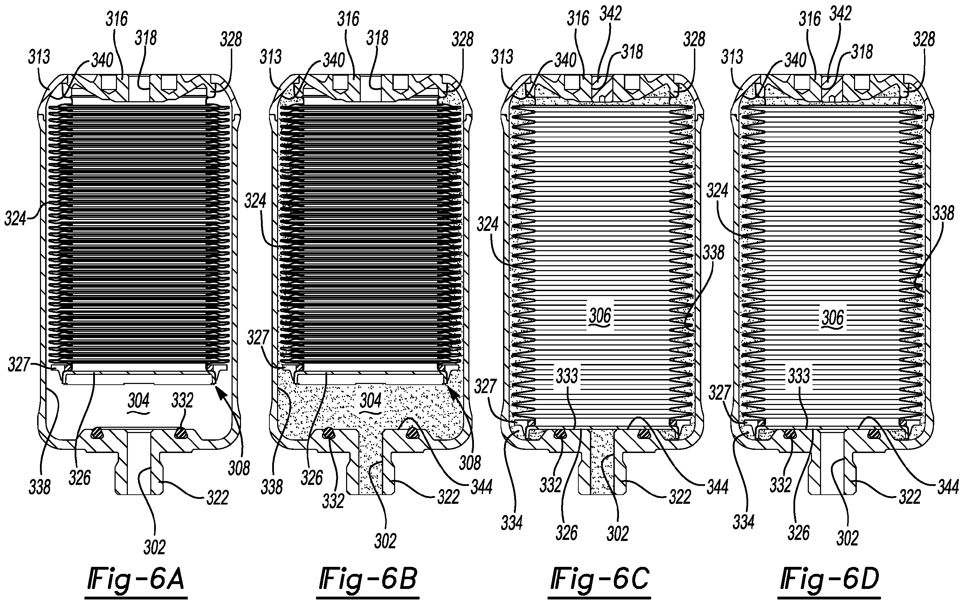

As best shown in FIG. 5, end wall 320 includes a groove 330 in receipt of a seal 332. Plate 326 and seal 332 form a valve 333 that is normally open when plate 326 is not at a fully extended position. Plate 326 engages seal 332 when bellows assembly 308 is in a fully extended position to operate valve 333 in a closed condition and define a charge chamber 334 (FIG. 6c) bounded by an external surface 336 of annular bellows wall 324, an inner surface 338 of outer shell 310, an inner surface 340 of crown 313 and annular flange 328.

It may be beneficial to fill charge chamber 334 with fluid prior to connecting gas charging port 318 to a source of pressurized gas. As previously mentioned, damage may occur to bellows assembly 308 if an overcharge event occurs and annular bellows wall 324 is undesirably deformed instead of merely expanded and contracted as intended. Figs. 6a, 6b, 6c and 6d depict a method of pre-charging accumulator 300 by filling charge chamber 334 with liquid prior to filling pressurized gas chamber 306 with pressurized gas to minimize the likelihood of damaging annular bellows wall 324. Fig. 6a is substantially the same as Fig. 5 and depicts accumulator 300 assembled but empty.

At Fig. 6b, fluid is supplied to accumulator port 302 at a pressure differential such that fluid pressure within charge chamber 334 exceeds the pressure within pressurized gas chamber 306. To assure that annular bellows wall 324 is not damaged during this portion of the process, it may be beneficial to previously or concurrently apply a vacuum to gas charging port 318 to cause annular bellows wall 324 to axially contract in length while maintaining the proper corrugated shape. The pressure deferential previously mentioned may be generated by applying a vacuum to gas charging port 318, supplying pressurized fluid to accumulator port 302 or a combination of both to assure that valve 333 is in the open condition.

Once a predetermined amount of fluid is positioned within charge chamber 334, accumulator 300 is filled with pressurized gas. The vacuum, if present at gas charging port 318 is removed and a pressurized gas, such as nitrogen, is supplied to gas charging port 318. During this step of the procedure, annular bellows wall 324 expands in length urging plate 326 toward end wall 320 of outer shell 310. Fluid that was positioned within accumulation chamber 304 is expelled through accumulator port 302. The expansion of bellows assembly 308 and expulsion of fluid through accumulator port 302 continues until plate 326 engages seal 332 as shown in Fig. 6c to place valve 333 in the closed condition. Pressured gas chamber 306 contains pressurized gas at a desired pressure with the gas it will contain for the life of the accumulator. A plug 342 is positioned within gas charging port 318 to maintain the desired pressure and volume of gas within pressurized gas chamber 306. Fluid is contained or otherwise trapped within charge chamber 334 based on the pressure differential between the pressurized gas within pressurized gas chamber 306 and the pressure of fluid at accumulator port 302. The pressure differential maintains sealing engagement between plate 326 and seal 332. Depending on the magnitude of the pressure differential, additional surface area of plate 326 may engage a seat 344 formed on end wall 320. Seal 332 compresses during engagement with plate 326 to allow plate 326 to simultaneously engage seat 344.

As shown in FIG. 6d, liquid is now be removed from accumulator port 302 to ready accumulator 300 for installation within a suspension assembly, shipping and handling to a suspension assembly location, shipping to a vehicle assembly location, or simply transfer to storage awaiting sale.

The method optionally further incudes fluidly coupling accumulator 300 to a damper such as damper 102a of Fig. 1, or any vehicle suspension component, to apply pressure to the fluid within first compression chamber 126a or any other fluid chamber or conduit based on the pressure within pressurized gas chamber 306. The method includes protecting the bellows from damage by maintaining the presence of fluid between the annular bellows wall and the outer shell during an application of fluid pressure to the accumulation chamber based on operation of the vehicle suspension. It should be appreciated that protecting the bellows from damage includes maintaining a substantially equivalent magnitude of pressure within the pressurized gas chamber 306 and charge chamber 334. During certain vehicle maneuvers, the fluid pressure at accumulator port 302 may drop to a magnitude less than the pressure of the compressed gas within pressurized gas chamber 306. If valve 333 of the present disclosure were not present, a significant pressure differential may exist across annular bellows wall 324 possibly causing significant damage to bellows assembly 308. Valve 333 entraps fluid between annular bellows wall 324 and outer shell 310 to assure that a significant pressure differential across the annular bellows wall 324 does not occur during vehicle operation or during pre-charging of the pressurized gas chamber 306.

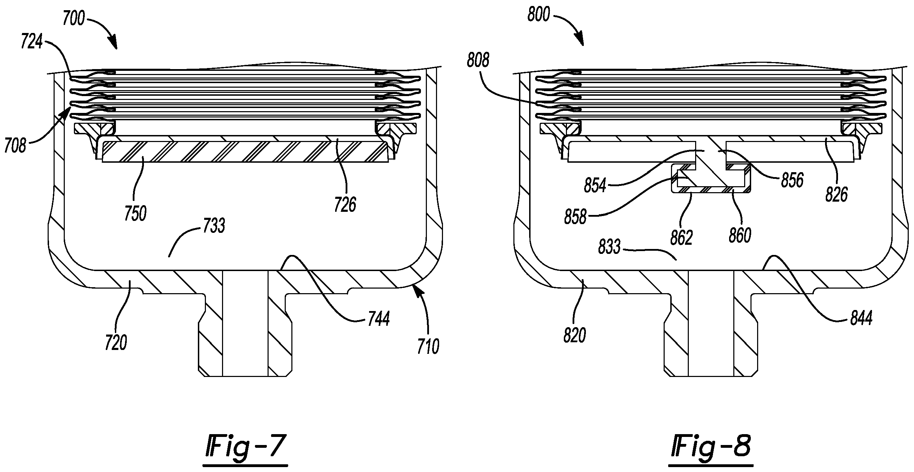

Figs. 7-14 depict valves or sealing arrangements operable to separate and fluidly isolate charge chamber 334 from accumulator port 302. The embodiments of Figs. 7-14 are substantially similar to the embodiment previously described and depicted with reference to Figs. 3-6d. Accordingly, similar elements will retain like reference numerals but increased by several hundred to correspond to the particular figure. For example, Fig. 7 depicts an accumulator 700 having an outer shell 710. With further reference to Fig. 7, a seal 750 is fixed to plate 726. Seal 750 may be an elastomeric member having one of several different geometrical configurations including a circular cross-section such as an O-ring, a rectangular cross-section such as a quad-ring or another geometrical arrangement such as a lip seal adapted to sealing engage a seat 744 of end wall 720 to define a valve 733.

FIG. 8 illustrates another alternate valve or sealing arrangement operable to separate charge chamber 334 from accumulator port 302. Accumulator 800 includes a plate 826 that includes an integrally formed and axially extending protrusion 854. Protrusion 854 may exhibit any number of geometrical shapes. In the instance depicted in FIG. 8, protrusion 854 includes an axially extending post 856 fixed to a transversely extending platen 858. It should be appreciated that plate 826 may be formed as a 1-piece member to include each of the portions depicted in FIG. 8, including post 856 and platen 858 or may alternatively be constructed from two or more subcomponents as an assembly.

The valve 833 or sealing arrangement of accumulator 800 includes a seal 860. Seal 860 may be a snap-on element that is fixed to platen 858 at any time during the assembly process. It may be beneficial to affix seal 862 to platen 858 after manufacturing processes such as welding have been completed to minimize exposure of seal 860 to such an environment. When bellows assembly 808 is in its fully extended position, a sealing surface 862 of seal 860 engages seat 844 of end wall 820 to place valve 833 in the closed condition.

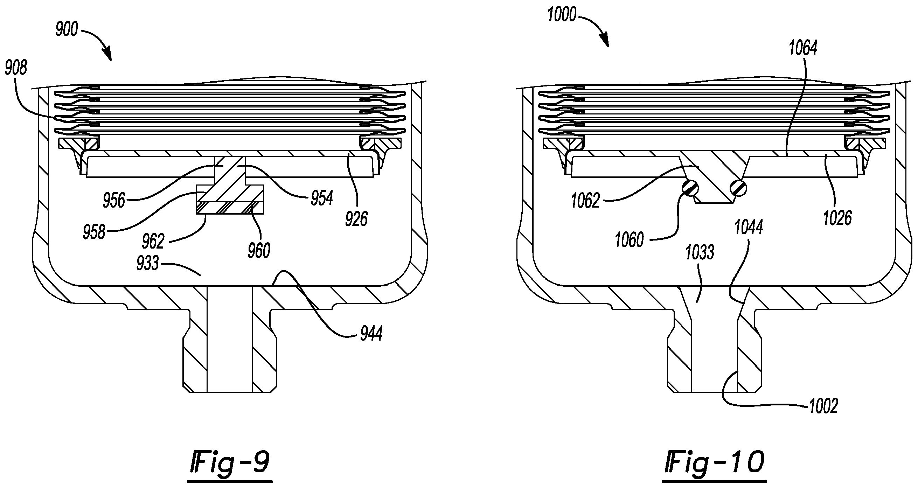

With reference to FIG. 9, an accumulator 900 includes an alternate valve 933 substantially similar to valve 833 previously described in reference to FIG. 8. In the embodiment depicting FIG. 9, an axially extending protrusion 954 is a separate and distinct component as compared to plate 926. Protrusion 954 may be constructed from a different material than plate 926 as desired. It is envisioned that protrusion 954 is fixed to plate 926 via any number of mechanisms including welding, adhesive bonding, mechanical fasteners, press fit arrangements and the like. Protrusion 954 also includes a post portion 956 integrally formed with a platen 958. A separate seal 960 is fixed to platen 958 via a process such as over- molding, adhesive bonding, snap-fit, or any other suitable means of attachment. Seal 960 is elastomeric. A sealing surface 962 engages seat 944 when bellows assembly 908 is in its fully extended position to place valve 933 in the closed condition.

With reference to FIG. 10, an accumulator 1000 includes another alternate valve or sealing arrangement 1033. FIG. 10 depicts an alternate plate 1026 including a frustoconical portion 1062 axially extending from a planar body portion 1064. Frustoconical portion 1062 may be integrally formed with planar body portion 1064 or may be a separate component fixed there too. A portion of port 1002 includes a seat 1044 having a frustoconical shape having a complementary size and shape to frustoconical portion 1062. Engagement of the frustoconical surfaces may be sufficient to provide the desired seal. An optional elastomeric seal 1060 may be provided on either frustoconical portion 1062 or frustoconical shaped seat 1044, if desired.

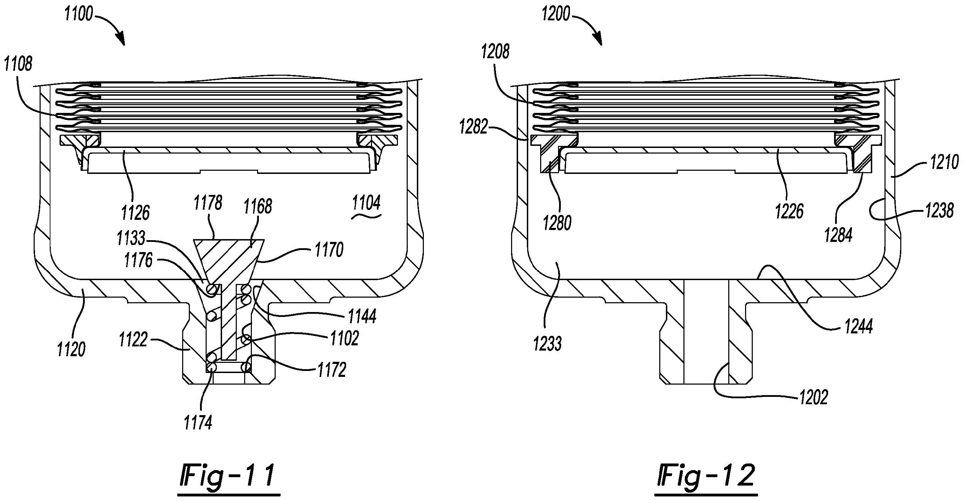

With reference to FIG. 11, an accumulator 1100 is equipped with a spring biased stopper 1168. Stopper 1168 includes a frustoconical surface 1170 sized and shaped to correspond to a frustoconical shaped seat 1144 formed in end wall 1120 and accumulator port 1102 to define a valve 1133. A land 1172 radially inwardly extends within nipple 1122 to retain and react a load from a spring 1174. Spring 1174 is trapped between land 1172 and a shoulder 1176 to position stopper 1168 in a normally open position. In the normally open position, fluid may freely flow through accumulator port 1102 from accumulation chamber 1104. When bellows assembly 1108 is at the fully extended position, plate 1126 engages an end face 1178 of stopper 1168 to bias frustoconical surface 1170 into engagement with frustoconical seat 1144 and seal off the charged chamber from accumulator port 1102, placing valve 1133 in the closed condition.

With reference to FIG. 12, an accumulator 1200 includes an alternate sealing arrangement including an injection molded seal 1280 fixed to plate 1226. Seal 1280 includes a substantially cylindrically shaped outer surface 1282 minimally spaced apart from inner surface 1238 of outer shell 1210 to allow for the largest diameter seal 1280 as possible. Seal 120 includes a sealing surface 1284 that selectively engages surface 1244 of outer shell 1210 when valve 1233 operates in the closed condition. One benefit of the design depicted in FIG. 12 includes providing a relatively large diameter at which the sealing occurs. This geometry may minimize an undesirable hysteresis effect when attempting to collapse bellows assembly 1208. Another optional fluid filling port (not shown) may extend through outer shell 1210 on the opposite side of seal 1280 as accumulator port 1202 to assure that fluid is present between an outer surface of bellows assembly 1208 and outer shell 1210.

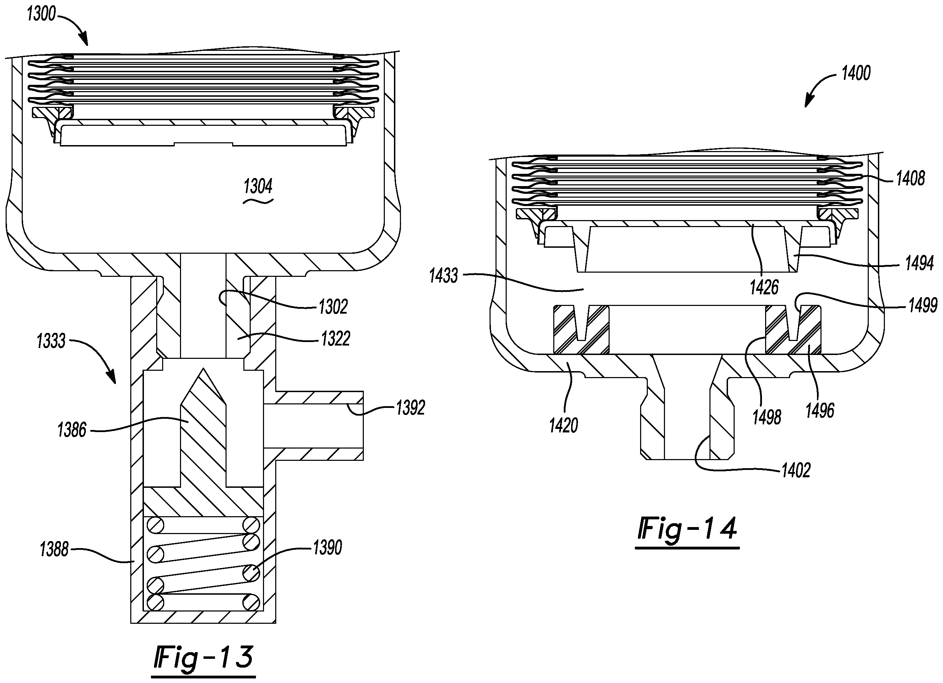

In relation to FIG. 13, and accumulator 1300 includes a valve assembly 1333 operable to selectively allow or restrict fluid to flow through accumulator port 1302. Valve assembly 1333 includes a movable plunger 1386 positioned within a housing 1388. A spring 1390 biases plunger 1386 into sealing engagement with nipple 1322, or another geometrical feature of accumulator port 1302, or valve 1333. Valve 1333 is constructed as a normally closed valve with plunger 1386 restricting flow through accumulator port 1302. When a pressure of sufficient magnitude is provided within accumulation chamber 1304 or supplied to an inlet 1392 of valve assembly 1333 to overcome the force provided by spring 1390, plunger 1386 axially translates away from seated engagement and allows fluid flow through accumulator port 1302.

With reference to FIG. 14, and accumulator 1400 includes a ring-shaped and axially protruding wedge 1494. Wedge 1494 may be integrally formed with plate 1426 or a separate component attached thereto. An elastomeric seal ring 1496 is fixed to end wall 1420. An enlarged central aperture 1498 extends through seal ring 1496. A circumferentially extending V-shaped groove 1499 is size, shaped, and oriented to selectively receive wedge 1494 when bellows assembly 1408 is at its fully extended position. Upon engagement between wedge 1494 and seal ring 1496, valve 1433 is in the closed condition and fluid is restricted from passing thereby and through accumulator port 1402. One benefit of the design depicted in FIG. 14 may include providing a relatively large diameter at which the sealing occurs. This geometry may minimize an undesirable hysteresis effect when attempting to collapse bellows assembly 1408.

Furthermore, the foregoing discussion discloses and describes merely exemplary embodiments of the present disclosure. One skilled in the art will readily recognize from such discussion, and from the accompanying drawings and claims, that various changes, modifications and variations may be made therein without departing from the spirit and scope of the disclosure as defined in the following claims.

### NUMBERED LIST OF EMBODIMENTS

1. A method of charging a bellows accumulator for a vehicle suspension system including a damper, the method comprising:
   providing an outer shell with an accumulator port and a gas charging port;
   inserting a bellows assembly within the outer shell, the bellows assembly including an annular bellows wall and a plate defining a gas chamber of variable volume, the plate being axially movable between a first position and a second position, the gas chamber arranged in fluid communication with the gas charging port, wherein an accumulation chamber is provided between the outer shell and the bellows assembly, the accumulation chamber being in fluid communication with the accumulator port;
   positioning a valve in fluid communication with the accumulation chamber;
   operating the valve in an open condition when the plate is not at the second position and operating the valve in a closed condition when the plate is at the second position,
   filling the accumulation chamber with fluid prior to filling the gas chamber with pressurized gas when the plate is not at the second position;
   supplying pressurized gas to the gas charging port;
   providing a pressure differential between the pressurized gas chamber and the accumulation chamber to axially extend the annular bellows wall and axially translate the plate to the second position; and
   operating the valve in the closed condition to maintain fluid between the outer shell and the annular bellows wall.
2. The method of embodiment 1, further including providing a pressure differential between the pressurized gas chamber and the accumulation chamber to axially collapse the annular bellows wall and axially translate the plate away from the second position when filling the accumulation chamber with fluid prior to filling the gas chamber with pressurized gas.
3. The method of embodiment 2, wherein providing a pressure differential between the pressurized gas chamber and the accumulation chamber to axially collapse the annular bellows wall and axially translate the plate away from the second position includes applying a vacuum to the pressurized gas port.
4. The method of embodiment 1, wherein positioning a valve includes providing a seal on one of the bellows assembly and the outer shell, the seal being engaged with the other of the bellows assembly and the outer shell when in the closed condition.
5. The method of embodiment 1, wherein operating the valve in the closed condition includes engaging a seal coupled to the plate with the outer shell.
6. The method of embodiment 1, wherein the bellows assembly includes a protrusion extending from the plate, wherein a seal is coupled to the protrusion, wherein operating the valve in the closed condition includes engaging the seal coupled to the plate with the outer shell.
7. The method of embodiment 6, further including over-molding or snap-fitting the seal to the protrusion.
8. The method of embodiment 1, further including defining a tapered seat on the outer shell and coupling a tapered protrusion to the bellows assembly, wherein operating the valve in the closed condition includes engaging the tapered protrusion with the tapered seat.
9. The method of embodiment 1, wherein the valve includes a stopper and a spring, the spring urging the stopper away from a seated position to operate the valve in the open condition, the method further including engaging the bellows assembly with the stopper to overcome a force provided by the spring and move the stopper to the seated position to operate the valve in the closed condition.
10. The method of embodiment 1, wherein the valve includes a plunger and a spring, the spring urging the plunger toward a seated position to operate the valve in the closed condition, the method further including supplying pressurized fluid to the plunger to urge the plunger toward an unseated position against a force provided by the spring and operate the valve in the open condition.
11. The method of embodiment 1, further including fluidly coupling the bellows accumulator to the damper and applying a pressure to fluid in the damper from the pressurized fluid in the bellows accumulator.
12. A method of operating a bellows accumulator for a vehicle suspension system including a damper, the method comprising:
   providing an outer shell;
   providing a bellows assembly including an annular bellows wall and a plate defining a gas chamber of variable volume, the plate being axially movable between a first position and a second position;
   providing an accumulation chamber in fluid communication with the bellows assembly;
   providing a valve in fluid communication with the accumulation chamber, wherein the valve is in an open condition when the plate is not at the second position and the valve in a closed condition when the plate is at the second position;
   filling the accumulation chamber with fluid;
   filling the gas chamber with pressurized gas such that the gas chamber contains pressurized gas and the fluid is entrapped within a charge chamber between the annular bellows wall and the outer shell when the valve is in the closed condition; and
   protecting the bellows from damage by maintaining the presence of the fluid between the annular bellows wall and the outer shell during an application of fluid pressure to the accumulation chamber based on operation of the vehicle suspension.
13. The method of embodiment 12, wherein protecting the bellows from damage includes maintain a substantially equivalent magnitude of pressure within the gas chamber and the charge chamber.
14. A bellows accumulator for a vehicle suspension system including a damper, the bellows accumulator comprising:
   an outer shell with an accumulator port and a gas charging port;
   a bellows assembly including an annular bellows wall and a plate defining a gas chamber of variable volume, the plate being axially movable between a first position and a second position, the gas chamber arranged in fluid communication with the gas charging port, wherein an accumulation chamber is provided between the outer shell and the bellows assembly, the accumulation chamber being in fluid communication with the accumulator port; and
   a valve in fluid communication with the accumulation chamber, wherein the valve is in an open condition when the plate is not at the second position and the valve in a closed condition when the plate is at the second position, the accumulation chamber being configured to be filled with fluid prior to filling the gas chamber with pressurized gas when the plate is not at the second position, and wherein the gas chamber contains pressurized gas and the fluid is entrapped between the annular bellows wall and the outer shell when the valve is in the closed condition.
15. The bellows accumulator of embodiment 14, wherein the valve includes a seal on one of the bellows assembly and the outer shell, the seal being engaged with the other of the bellows assembly and the outer shell when the valve is in the closed condition.
16. The bellows accumulator of embodiment 14, wherein the valve includes a seal coupled to the plate and in engagement with the outer shell when the valve is in the closed condition.
17. The bellows accumulator of embodiment 14, wherein the bellows assembly includes a protrusion extending from the plate, wherein a seal is coupled to the protrusion, the seal being coupled to the plate and engaging the outer shell when the valve is in the closed condition.
18. The bellows accumulator of embodiment 17, wherein the seal is over-molded or snap-fit to the protrusion.
19. The bellows accumulator of embodiment 14, wherein the outer shell includes a tapered seat and the bellows assembly includes a tapered protrusion, wherein the tapered protrusion engages the tapered seat when the valve is in the closed condition.
20. The bellows accumulator of embodiment 14, wherein the valve includes a stopper and a spring, the spring urging the stopper away from a seated position to place the valve in the open condition, the stopper being engaged by the bellows assembly with a force overcoming the spring to move the stopper to the seated position when the valve is in the closed condition.
21. The bellows accumulator of embodiment 14, wherein the valve includes a plunger and a spring, the spring urging the plunger toward a seated position to operate the valve in the closed condition, wherein pressurized fluid supplied to the plunger urges the plunger toward an unseated position against a force provided by the spring when the valve is in the open condition.
22. The bellows accumulator of embodiment 14, wherein the accumulator port is in fluid communication with the damper to apply a pressure to fluid within the damper from the pressurized gas.

## Claims

1. A method of charging a bellows accumulator for a vehicle suspension system including a damper, the method comprising:
providing an outer shell (310) with an accumulator port (302) and a gas charging port (318);
inserting a bellows assembly (308) within the outer shell, the bellows assembly including an annular bellows wall (324) and a plate (326) defining a gas chamber of variable volume, the plate being axially movable between a first position and a second position, the gas chamber arranged in fluid communication with the gas charging port, wherein an accumulation chamber (304) is provided between the outer shell and the bellows assembly, the accumulation chamber being in fluid communication with the accumulator port;
positioning a valve (333) in fluid communication with the accumulation chamber;
operating the valve in an open condition when the plate is not at the second position and operating the valve in a closed condition when the plate is at the second position,
filling the accumulation chamber with fluid prior to filling the gas chamber with pressurized gas when the plate is not at the second position;
supplying pressurized gas to the gas charging port;
providing a pressure differential between the pressurized gas chamber and the accumulation chamber to axially extend the annular bellows wall and axially translate the plate to the second position; and
operating the valve in the closed condition to maintain fluid between the outer shell and the annular bellows wall.

2. The method of claim 1, further including providing a pressure differential between the pressurized gas chamber and the accumulation chamber to axially collapse the annular bellows wall and axially translate the plate away from the second position when filling the accumulation chamber with fluid prior to filling the gas chamber with pressurized gas.

3. The method of claim 2, wherein providing a pressure differential between the pressurized gas chamber and the accumulation chamber to axially collapse the annular bellows wall and axially translate the plate away from the second position includes applying a vacuum to the pressurized gas port.

4. The method according to any one of claims 1-3, wherein positioning a valve includes providing a seal (332) on one of the bellows assembly and the outer shell, the seal being engaged with the other of the bellows assembly and the outer shell when in the closed condition.

5. The method according to any one of claims 1-3, wherein operating the valve in the closed condition includes engaging a seal (332) coupled to the plate with the outer shell.

6. The method according to any one of claims 1-3, wherein the bellows assembly includes a protrusion (854) extending from the plate, wherein a seal (860) is coupled to the protrusion, wherein operating the valve in the closed condition includes engaging the seal coupled to the plate with the outer shell.

7. The method of claim 6, further including over-molding or snap-fitting the seal to the protrusion.

8. The method according to any one of claims 1-5, further including defining a tapered seat on the outer shell and coupling a tapered protrusion to the bellows assembly, wherein operating the valve in the closed condition includes engaging the tapered protrusion with the tapered seat.

9. The method according to any one of claims 1-8, wherein the valve includes a stopper (1168) and a spring (1174), the spring urging the stopper away from a seated position to operate the valve in the open condition, the method further including engaging the bellows assembly with the stopper to overcome a force provided by the spring and move the stopper to the seated position to operate the valve in the closed condition.

10. The method according to any one of claims 1-8, wherein the valve includes a plunger (1386) and a spring (1390), the spring urging the plunger toward a seated position to operate the valve in the closed condition, the method further including supplying pressurized fluid to the plunger to urge the plunger toward an unseated position against a force provided by the spring and operate the valve in the open condition.

11. The method according to any one of claims 1-10, further including fluidly coupling the bellows accumulator to the damper and applying a pressure to fluid in the damper from the pressurized fluid in the bellows accumulator.

12. A bellows accumulator (142a-142d; 242a-242d) for a vehicle suspension system including a damper, the bellows accumulator comprising:
an outer shell (310) with an accumulator port (302) and a gas charging port (318);
a bellows assembly (308) including an annular bellows wall (324) and a plate (326) defining a gas chamber of variable volume, the plate being axially movable between a first position and a second position, the gas chamber arranged in fluid communication with the gas charging port, wherein an accumulation chamber is provided between the outer shell and the bellows assembly, the accumulation chamber being in fluid communication with the accumulator port; and
a valve (333) in fluid communication with the accumulation chamber, wherein the valve is in an open condition when the plate is not at the second position and the valve in a closed condition when the plate is at the second position, the accumulation chamber being configured to be filled with fluid prior to filling the gas chamber with pressurized gas when the plate is not at the second position, and wherein the gas chamber contains pressurized gas and the fluid is entrapped between the annular bellows wall and the outer shell when the valve is in the closed condition.

13. The bellows accumulator of claim 12, wherein the valve includes a seal (332) on one of the bellows assembly and the outer shell, the seal being engaged with the other of the bellows assembly and the outer shell when the valve is in the closed condition.

14. The bellows accumulator of claim 12, wherein the valve includes a seal (332) coupled to the plate and in engagement with the outer shell when the valve is in the closed condition.

15. The bellows accumulator of claim 12, wherein the bellows assembly includes a protrusion (854) extending from the plate, wherein a seal (860) is coupled to the protrusion, the seal being coupled to the plate and engaging the outer shell when the valve is in the closed condition.
